# EUROPEAN PATENT SPECIFICATION

(11) **EP 3 821 774 B1**
(45) Date of publication and mention of the grant of the patent: **08.05.2024**
(21) Application number: 19940954.1
(22) Date of filing: 29.10.2019
(51) Int. Cl.: A47J 43/07, A47J 43/046

(54) **FOOD PROCESSOR**
KÜCHENMASCHINE
ROBOT DE CUISINE

(30) Priority: 23.08.2019 CN 201910785405
(43) Date of publication of application: 19.05.2021
(73) Proprietor: KingClean Electric Co., Ltd., Suzhou New District Suzhou Jiangsu 215163 (CN)
(72) Inventor: NI, Zugen, Suzhou Jiangsu 215163 (CN)
(74) Representative: Mewburn Ellis LLP
(86) International application number: PCT/CN2019/114115
(87) International publication number: WO 2021/035930

(56) References cited:
- CN-A- 106 691 149
- CN-A- 107 095 599
- CN-A- 108 567 303
- CN-A- 109 464 039
- CN-A- 110 313 854
- CN-A- 110 313 854
- CN-U- 205 306 815
- CN-U- 205 866 652
- CN-U- 208 510 861
- CN-U- 208 510 861
- CN-U- 208 510 861
- US-A- 5 908 242
- US-A1- 2017 080 592

## Description

### TECHNICAL FIELD

The invention relates to a technical field of household appliance, and more particularly to a food preparation device.

### BACKGROUND

A food preparation device is a household appliance that integrates functions of preparing soy milk, grinding dry powder, squeezing juice, mincing meat, shaving ice, and so on. Moreover, the food preparation device is the household appliance used to prepare various kinds of food such as juice, soy milk, jam, dry powder, shaved ice, minced meat and so on, and is a product that is multi-functionalized from a juicing machine.

Safety performance is vital to the household appliances such as the food preparation device. At present, the food preparation device commercially available generally adopts a split structure, including a body and a detachable container. When the food preparation device is in operation, a motor in the body rotates at a high speed and drives a knife or a stirring member in the container to rotate so as to complete food preparation. At this time, the container needs to be locked on the body to avoid a safety accident caused by removal of the container during operation of the food preparation device. In the prior art, a locking member is provided in the body, and the locking member slides in a horizontal direction toward an inside of the body to cooperate with the container, so as to lock the container and the body together. Although this structure can improve the safety performance of the food preparation device, the locking member occupies a larger space, which makes a size of the body larger.

US 5,908,242 A discloses a stand mixer with locking connection between the mixing bowl and the bowl support.

Therefore, there is a need for a food preparation device that can lock the container and the body together and can reduce the size of the body.

### SUMMARY

It is an objective of the present invention to provide a food preparation device in which a container and a body can be locked together, and a size of the body is small.

To achieve this purpose, the subject matter of the independent claims is provided. The dependent claims describe optional embodiments of the invention.

A food preparation device, which includes a body and a container assembly, a locking member is movably connected to the body, and the locking member is configured to be driven by the container assembly to rotate in a circumferential direction of the body when the container assembly is pressed towards the body in a mounting direction to be mounted on the body, so as to lock the container assembly onto the body.

The container assembly is mounted vertically into the body, a block is convexly provided on a side wall of the container assembly, the locking member has an abutting portion, and the abutting portion is capable of extending into or out of an upper part of the limiting portion during rotation of the locking member.

A mounting groove configured to accommodate a bottom of the container assembly is provided on the body, a groove capable of accommodating the limiting portion is provided on an inner side of the mounting groove, and the abutting portion is capable of extending into or out of the groove.

The food preparation device further includes:
a first locking assembly, when the container assembly is mounted on the body, the first locking assembly is configured to drive the locking member to rotate until the locking member is fixed in a locked position, such that the container assembly and the body are in a locked state; and
a second locking assembly that is configured to drive the locking member to rotate until the locking member is fixed in an unlocked position, such that the container assembly and the body are in an unlocked state.

The first locking assembly includes:
a first reset member configured to drive the locking member to rotate to the locked position relative to the body; and
a releasing portion movably connected to the body, when the container assembly is mounted on the body, the releasing portion is driven by the container assembly to move, so as to unlock the locking member from the second locking assembly.

The second locking assembly includes:
a block provided on the locking member, when the locking member is in the unlocked position, the block is capable of abutting against the releasing portion to prevent the first reset member from driving the locking member to reset.

The releasing portion is resettable and is capable of moving in a vertical direction relative to the body.

A first guide surface is provided on a top of the releasing portion, and the first guide surface is inclined downward in a locking direction of the locking member.

The second locking assembly further includes:
a toggle member, one end of the toggle member is connected to the locking member, and the other end extends out of the body; and
a resettable locking block movably connected to the body, when the toggle member drives the locking member to move to the unlocked position, the locking block is capable of being reset and being locked with the locking member.

When the releasing portion is driven by the container assembly to move, the releasing portion is capable of driving the locking block to separate from the locking member.

A second guide surface is provided on the releasing portion, and a guide portion slidably matched with the second guide surface is provided on the locking block, when the releasing portion is driven by the container assembly to move, the guide portion slides along the second guide surface to move away from the locking member.

A protruding portion is provided on the locking block, a lock slot is provided on the locking member, and when the locking member rotates to the unlocked position, the protruding portion is capable of being clipped into the lock slot.

The food preparation device further includes:
a cutting tool assembly mounted on the container assembly, a transmission end of the cutting tool assembly extends out of the container assembly and is capable of being connected to a driving assembly inside the body; and
a detection assembly configured to be capable of detecting a mounting state between the cutting tool assembly and the container assembly.

The detection assembly includes:
a sensing element provided on the body; and
a to-be-sensed element provided on the transmission end, when the container assembly is mounted on the body, and the cutting tool assembly and the container assembly are normally mounted, the to-be-sensed element is located within a detection range of the sensing element.

The to-be-sensed element is a magnetic member, and the sensing element is a Hall sensor or a dry-reed switch.

The food preparation device further includes:
a locking element of the cutting tool detachably connected to the transmission end and fixing the cutting tool onto the container assembly, and the to-be-sensed element is provided on the locking element of the cutting tool.

A trigger mechanism is provided in the body, and the trigger mechanism is configured to be capable of detecting whether the container assembly and the body are in a locked state or not.

The trigger mechanism includes a first sensing member, when the locking member locks the body and the container assembly together, the locking member is capable of triggering the first sensing member.

The container assembly includes a main body and a cover capable of being matched with the main body, a trigger mechanism is provided in the body, and the trigger mechanism is configured to be capable of detecting a mounting state of the cover on the main body of the container assembly mounted on the body.

A triggering member is movably connected to the main body, and the triggering mechanism includes a second sensing member; after the cover is assembled in position with the main body, the cover drives the triggering member to move to trigger the second sensing member.

The triggering member is slidably connected to the main body and resettable.

The cover is rotatably matched with the main body, a first inclined surface is provided on the cover, and a second inclined surface is provided on the triggering member;
when the cover rotates in a first direction relative to the main body, the first inclined surface slides along the second inclined surface and pushes the triggering member to slide;
when the cover rotates in a second direction relative to the main body, the first inclined surface is gradually separated from the second inclined surface, and the triggering member is reset.

### Advantageous Effects:

The present invention provides a food preparation device. In this food preparation device, when being mounted on the body, the container assembly can drive the locking member in the body to move, so that the locking member can be matched with the container assembly to complete locking between the container assembly and the body. The locking operation is simple and may not be forgotten by a user, which makes the safety performance of the food preparation device is good. The locking member may lock the container assembly and the body together by rotating in the circumferential direction of the body, and thus the space required for the movement of the locking member is small, which is beneficial to reducing the size of the body.

### BRIEF DESCRIPTION OF THE DRAWINGS

FIG. 1 is a schematic structure diagram of a food preparation device provided by embodiment 1 of the present invention.
FIG. 2 is a schematic structure diagram of the food preparation device provided in the embodiment 1 of the present invention, with a steamer assembly unassembled and a container assembly being in a locked state.
FIG. 3 is a schematic structure diagram of the food preparation device provided in the embodiment 1 of the present invention, with a steamer assembly unassembled and a container assembly being in an unlocked state.
FIG. 4 is a front view of FIG. 2.
FIG. 5 is a front view of a container assembly provided by the embodiment 1 of the present invention.
FIG. 6 is a schematic structure diagram of a tray provided by the embodiment 1 of the present invention.
FIG. 7 is a schematic structure diagram of a body when the container assembly is locked provided by the embodiment 1 of the present invention.
FIG. 8 is an enlarged view of area A in FIG. 7.
FIG. 9 is a schematic structure diagram of a body provided by the embodiment 1 of the present invention, with the container assembly unlocked.
FIG. 10 is an enlarged view of area B in FIG. 9.
FIG. 11 is a side view of an upper casing, a first reset member and a supporting block matched together provided by the embodiment 1 of the present invention.
FIG. 12 is a schematic structure diagram of a locking member, a first locking assembly and a second locking assembly assembled together provided by the embodiment 1 of the present invention.
FIG. 13 is a schematic structure diagram of the locking member provided by the embodiment 1 of the present invention.
FIG. 14 is a schematic structure diagram of the first locking assembly and the second locking assembly assembled together provided by the embodiment 1 of the present invention.
FIG. 15 is an exploded view of a first locking assembly and a second locking assembly provided by embodiment 2 of the present invention.
FIG. 16 is an exploded view of a partial structure of a body provided by the embodiment 2 of the present invention.
FIG. 17 is an exploded view of a locking member, the first locking assembly and the second locking assembly provided by the embodiment 2 of the present invention.
FIG. 18 is a front view of a container assembly provided by the embodiment 2 of the present invention, with the cover closed on the main body.
FIG. 19is a front view of a container assembly provided by the embodiment 2 of the present invention, without the cover closed on the main body.
FIG. 20 is a schematic structure diagram of the body provided by the embodiment 2 of the present invention.
FIG. 21 is an enlarged view of area C in FIG. 20.
FIG. 22 is a schematic structure diagram of a container assembly provided by the embodiment 2 of the present invention, with the cover unassembled.
FIG. 23 is a front view of a container assembly provided by the embodiment 2 of the present invention, with the cover and the main body closed abnormally and a handle omitted.
FIG. 24 is a front view of a container assembly provided by the embodiment 2 of the present invention, with the cover and the main body closed normally and a handle omitted.
FIG. 25 is a schematic structure diagram of a container assembly provided by embodiment 3 of the present invention.
FIG. 26 is a schematic structure diagram of a body provided by the embodiment 3 of the present invention.
FIG. 27 is a schematic structure diagram 1 of a cutting tool assembly provided by the embodiment 3 of the present invention.
FIG. 28 is a schematic structure diagram 2 of the cutting tool assembly provided by the embodiment 3 of the present invention.

Wherein:
1, body; 11, upper casing; 12, lower casing; 13, toggle member; 14, tray; 141, groove; 1411, stepped surface; 142, bottom plate; 143, inner plate; 144, outer plate; 15, supporting block;
2, container assembly; 21, cover; 211, first inclined surface; 22, container; 23, handle; 231, notch; 24, base; 241, limiting portion; 242, protruding block; 25, measuring cup; 26, triggering member; 261, second inclined surface; 27, fifth reset member;
3, steamer assembly;
4, locking member; 41, abutting portion; 42, lock slot; 43, block;
51, first reset member; 52, releasing portion; 521, second guide surface; 522, first guide rod; 523, guide hole; 524, abutting surface; 525, first guide surface; 53, second reset member;
61, locking block; 611, guide portion; 612, protruding portion; 62, third reset member; 63, supporting plate; 631, second guide rod;
71, adapter; 72, second sensing member; 73, fourth reset member; 74, second bracket; 75, first sensing member; 76, first bracket;
8, cutting tool assembly; 81, cutting tool; 82, locking element of cutting tool; 83, cutting tool seat; 84, spline;
91, transmission seat.

### DETAILED DESCRIPTION

The embodiments of the present disclosure will be described in detail below. Examples of the embodiments are shown in the accompanying drawings in which the same or similar reference signs indicate the same or similar elements or elements having the same or similar functions. The embodiments described below with reference to the accompanying drawings are exemplary, and are intended to explain the present disclosure, but should not be construed as limiting the present disclosure.

In the description of the present disclosure, it should be illustrated that terms indicating orientations or position relationships such as "center", "upper", "lower", "left", "right", "vertical", "horizontal", "inner", "outer", and so on are based on the orientations or position relationships shown in the accompanying drawings, which are used only to facilitate the description of the present disclosure and simplify the description, rather than indicating or implying that the device or element(s) referred to needs to have a specific orientation, be constructed and operated in a specific orientation, and thus the terms are not understood as limiting the present disclosure. Further, the terms "first", "second" are merely illustrative, and are not intended to indicate or imply the importance of the corresponding elements or the number of the technical features. The terms "first position" and "second position" are two different positions.

In the present disclosure, unless otherwise expressly specified and defined, the terms "mounted", "coupled", "connected" and "fixed" should be interpreted broadly. For example, the connection may be a fixed connection or a detachable connection. The connection may also be a mechanical connection or an electrical connection. Furthermore, the connection may be a direct connection or an indirect connection via an intermedium, an internal connection between the two components or an interaction between the two components. For those of ordinary skill in the art, the specific meanings of the above terms in the present disclosure can be understood according to specific circumstances.

In the present disclosure, unless otherwise expressly specified and defined, that a first feature is "on" or "under" a second feature may include the first feature directly contacts the second feature, or may include the first feature does not directly contact the second feature but through other features therebetween. Moreover, that the first feature is "over" or "above" the second feature includes the first feature is directly above and obliquely above the second feature, or simply means that a level height of the first feature is higher than that of the second feature. That the first feature is "below" the second feature includes the first feature directly below and obliquely below the second feature, or simply means that the level height of the first feature is less than that of the second feature.

The technical solutions of the present invention will be further described below in conjunction with the drawings and specific implementations.

### Embodiment 1

This embodiment provides a food preparation device, which can be used to make a variety of food such as fruit juice, soy milk, jam, dry powder, shaved ice, minced meat and the like.

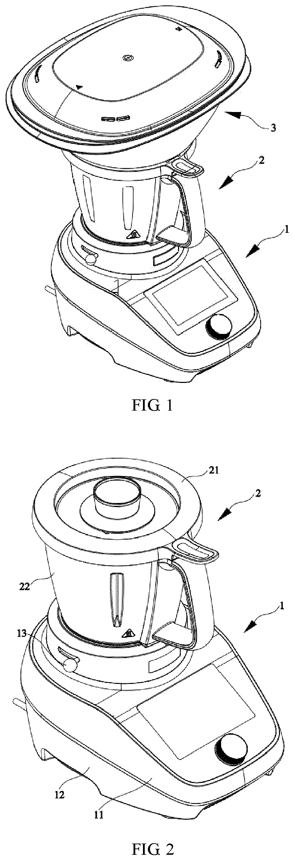

As shown in FIG. 1, the food preparation device includes a body 1, a container assembly 2 and a steamer assembly 3. The body 1 serves as a carrier of the container assembly 2 and the steamer assembly 3, and accommodates functional components such as a power system and a control system inside. The container assembly 2 can be mounted on the body 1, and a cutting tool assembly and a heating component are provided in the container assembly 2. The cutting tool assembly is configured to further process food materials, and the heating component is configured to heat the container assembly 2. It should be noted that the steamer assembly 3 as an auxiliary device is optional. The steamer assembly 3 can be detachably connected to the container assembly 2. When the steamer assembly 3 is needed, water is placed in the container assembly 2 and is heated by the heating component inside the container assembly 2, so that steam generated enters the steamer assembly 3.

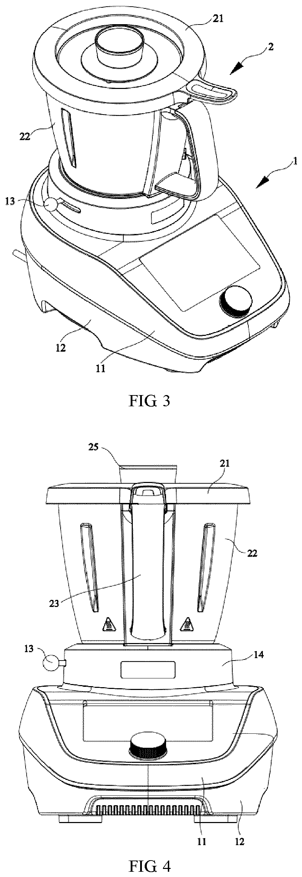

For improvement of the safety performance of the food preparation device, as shown in FIG. 2, when the container assembly 2 is placed on the body 1, the container assembly 2 and the body 1 can be automatically locked together to prevent the two from being separated from each other. When the container assembly 2 needs to be removed, as shown in FIG. 3, the container assembly 2 and the body 1 are unlocked by toggling the toggle member 13, and then the container assembly 2 may be removed.

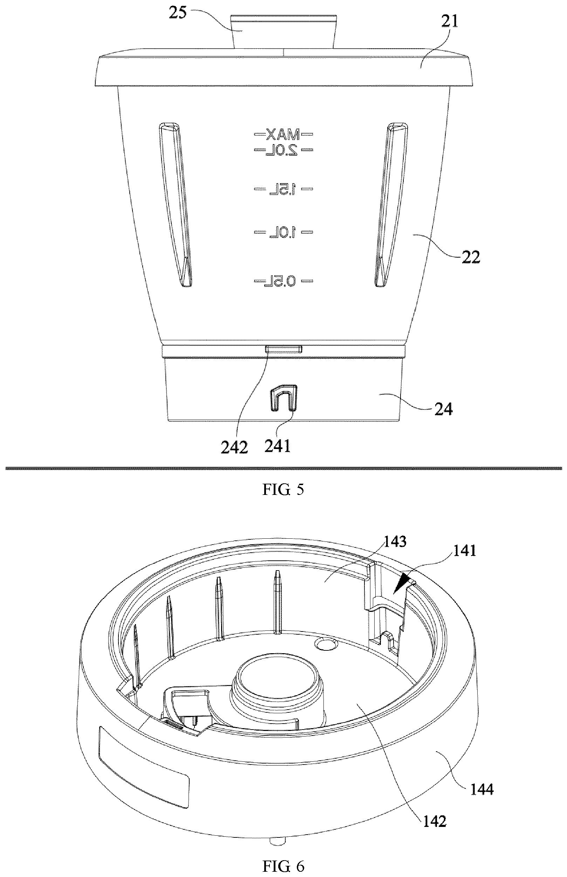

In this embodiment, locking action between the container assembly 2 and the body 1 is automatically triggered by the installation of the container assembly 2, no additional operations are required, which makes the locking action more convenient and faster, and may avoid safety accidents caused by forgetting to lock the container assembly 2 by the user. Specifically, as shown in FIGS. 4 and 5, the container assembly 2 includes a cover 21 and a main body, and the main body includes a container 22, a handle 23, and a base 24. The cover 21 can cover the top of the container 22, and the handle 23 is provided on a side of the container 22, so that the user can hold the handle 23 by hand to move the container assembly 2 conveniently. A measuring cup 25 is further provided on the cover 21 and can be detachably connected to the cover 21. When the measuring cup 25 is fixed to the cover 21, the measuring cup 25 can serve as a handle of the cover 21 to facilitate the user to lift or cover the cover 21. After the measuring cup 25 is detached from the cover 21, the user may use the measuring cup 25 to measure an appropriate amount of food conveniently. The container 22 is provided on the base 24, and the base 24 is provided with a structure that is matched with the body 1 so that the functional components in the body 1 can process the food in the container 22.

The body 1 includes an upper casing 11 and a lower casing 12. After the upper casing 11 and the lower casing 12 are fixed, an installation chamber for accommodating the power system and the control system is formed inside the body 1. A tray 14 is provided on the upper casing 11, and the tray 14 is provided with a mounting groove configured to carry the container assembly 2. When the container assembly 2 is placed on the body 1, a lower end of the container assembly 2 can be inserted into the tray 14, which is beneficial to improving the fixation of the container assembly 2.

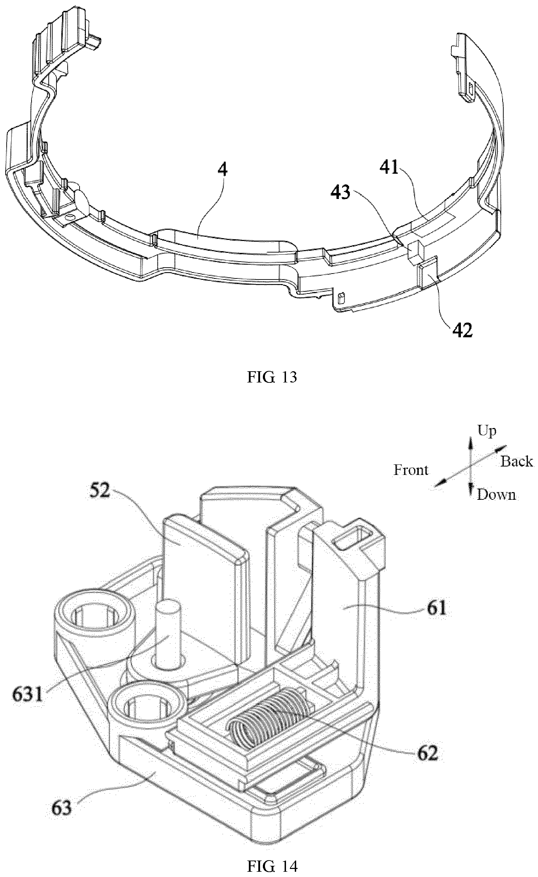

As shown in FIG. 5, a limiting portion 241 is provided on the container assembly 2, and a locking member 4 is movably connected to the body 1 (see FIG. 13). When the container assembly 2 is placed on the body 1, the locking member 4 can be driven to move relative to the body 1 to be matched with the limiting portion 241, Therefore, the container assembly 2 is prevented from being separated from the body 1, thereby achieving the purpose of locking the container assembly 2 with the body 1.

In this embodiment, the limiting portion 241 is provided on a side wall of the base 24 and protruded therefrom, and the locking member 4 is movably connected with the tray 14. When the container assembly 2 is placed on the body 1, the base 24 enters the tray 14 so as to be matched with the locking member 4. Optionally, the container assembly 2 can be mounted vertically into the tray 14, and the locking member 4 can be driven to move to the top of the limiting portion 241 to prevent the container assembly 2 from being pulled out of the tray 14, thereby realizing the locking of the container assembly 2 with the body1. The locking realized by moving the locking member 4 to a front side of the pulling-out direction of the limiting portion 241 makes the structure of the food preparation device simple and the locking effect reliable.

For preventing shaking of the container assembly 2on the body 1, when the container assembly 2 is locked with the body 1, the locking member 4 is arranged to abut against the top of the limiting portion 241 to further restrict the position of the container assembly 2.

In other embodiments, the container assembly 2 can also be mounted into the tray 14 in other directions. For example, an opening is provided on a side of the tray 14. The container assembly 2 may be horizontally mounted into the tray 14 through the opening, and the locking member 4 maybe moved to cross a movement track of the container assembly 2 when it is taken out.

In other embodiments, the locking may also be achieved by a snap connection of the limiting portion 241 with the locking member 4 or the like.

In order to further improve the limiting effect of the tray 14 to the position of the container assembly 2, when the container assembly 2 is mounted into the tray 14, an outer side wall of the container assembly 2 abuts against an inner side wall of the mounting groove, that is, the shape and size of the space inside the mounting groove may be the same as the shape and size of a base plate of the container assembly 2, which is beneficial to improving the limiting effect to the position of the container assembly 2.

In order to prevent the limiting portion 241 from interfering with the engagement between the container assembly 2 and the tray 14, as shown in FIG. 6, a groove 141 capable of accommodating the limiting portion 241 is provided on the inner sidewall of the mounting groove. When the container assembly 2 is mounted down from the top, the limiting portion 241 slides down along the groove 141 to avoid interference with the tray 14. After the container assembly 2 is mounted into the tray 14, the locking member 4 is driven to move to extend into the groove 141 and abut on a top surface of the limiting portion 241, so that the locking is achieved.

In order to further ensure the locking effect between the container assembly 2 and the body 1, as shown in FIG. 5, a protrusion 242 is provided on the container assembly 2 and located above the limiting portion 241. After the container assembly 2 is placed on the body 1, the locking member 4 is driven to move, so that the abutting portion 41 slides into the groove 141 and is located between the protrusion 242 and the abutting portion 241, thereby further improving the locking effect between the container assembly 2 and the body 1. In addition, the top opening of the groove 141 may be blocked by the protrusion 242, and food residues or other sundries maybe prevented from falling into the groove 141, so that the appearance of the tray 14 is more appealing, and it is convenient for the user to quickly mount the container assembly 2 into the body 1 in a pressing-mounting direction and to lock the container assembly 2.

In order to reduce the space required for movement of the first locking member 4relative to the body 1, in this embodiment, the locking member 4 may rotate in the circumferential direction of the tray 14 to enter or retract out of the groove 141. With the locking member 4 rotating in the circumferential direction of the tray 14, the space required for the movement of the locking member 4 can be reduced, which is beneficial to making the structure of the food preparation device more compact and realizing a miniaturization design of the food preparation device.

Specifically, the tray 14 includes a bottom plate 142 and a side plate connected to the bottom plate 142, and the side plate and the bottom plate 142 are enclosed to form a mounting groove for accommodating the base plate of the container assembly 2. The side plate may be a double-layer structure formed by a process such as flanging, and the cross-sectional shape may be a U shape, so that the locking member 4 can be provided in the double-layer structure of the side plate. The side plate includes an inner plate 143 and an outer plate 144 formed by bending the inner plate 143 outward. A chamber is formed between the inner plate 143 and the outer plate 144, and a groove 141 is provided on the inner plate 143 and is in communication with the chamber. The locking member 4 maybe slidably arranged in the chamber. The above side plate structure can hide the locking member 4 and make the tray 14 more appealing as an appearance member. The locking member 4 slides along the circumferential direction of the chamber, making the space required for sliding small and achieving the position limiting effect to the locking member 4, which is beneficial to reducing the space required for the locking member 4 to lock the container assembly 2 with the body 1. In this embodiment, the tray 14 is integrally formed, which is convenient to process and simple in structure.

Optionally, the locking member 4 may be annular, so that the locking member 4 provided in the annular chamber can have a better stability.

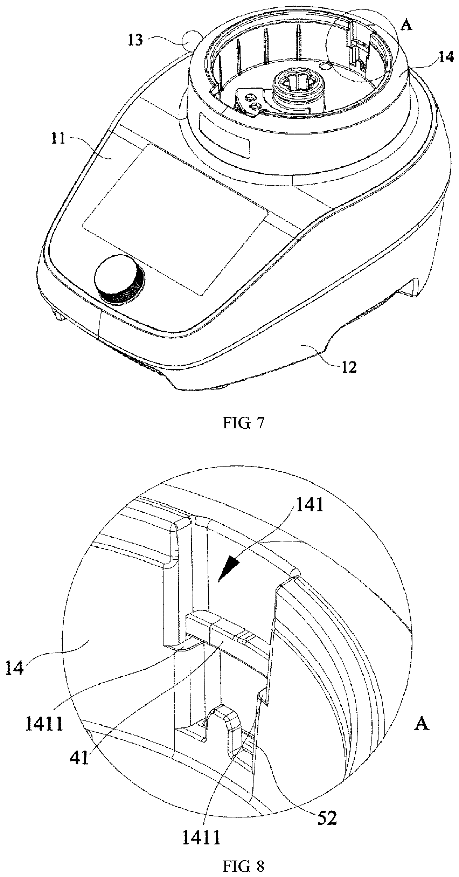

Optionally, an abutting portion 41 is provided on the inner side of the locking member 4. As shown in FIGS. 7 and 8, After the container assembly 2 is mounted onto the body 1, the locking member 4 will be driven to move to cause the abutting portion 41 to slide into the groove 141, and the limiting portion 241 is located below the abutting portion 41, so that the locking between the container assembly 2 and the body 1 is realized.

In order to further improve the locking effect between the container assembly 2 and the body 1, there may be a plurality of limiting portions 241 provided on the container assembly 2. After the container assembly 2 is mounted in the body 1, the locking member 4 will be driven to move to abut against the tops of the plurality of limiting portions 241, increasing the number of force points between the limiting portions 241 and the locking member 4, and thereby improving the locking effect to the container assembly 2. The number of the abutting portions 41 is the same as the number of the limiting portions 241 on the container assembly 2, which improves the locking effect to the container assembly 2.

Optionally, above one of the plurality of abutting portions 41 is provided the protrusion 242, such that a fool-proof structure maybe formed which guides the container assembly 2 is mounted on the body 1 at a specified angle, thereby improving the safety performance of the food preparation device.

In this embodiment, two limiting portions 241 are provided on the container assembly 2 and respectively provided on two sides of the base plate. Two abutting portions 41 are provided on the locking member 4, and each abutting portion 41 is engaged with one corresponding limiting portion 241 on the container assembly 2. By providing a limiting portion 241 on each of the two opposite sides of the container assembly 2, the container assembly 2 is locked and balanced. The two limiting portions 241 are in directions having a 180-degree angle therebetween, so that the force applied on the container assembly 2 when being locked maybe more uniform and the locking effect may be good.

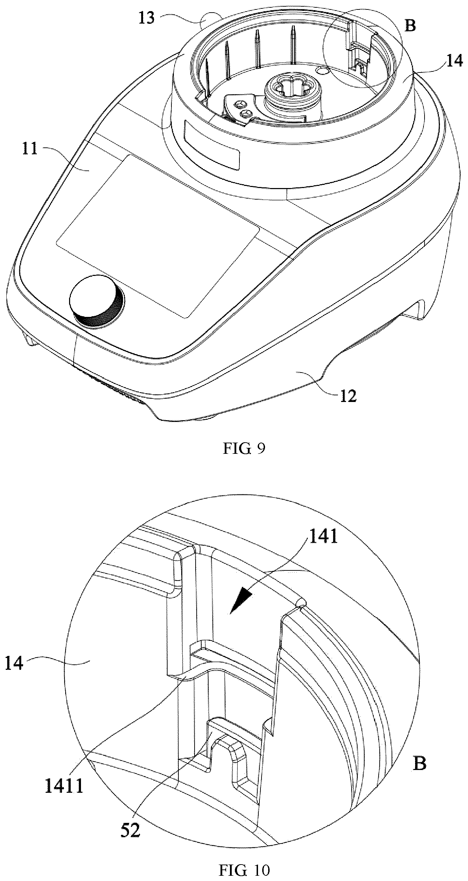

In order that the locking member 4 may be driven to move after the installation of the container assembly 2 and that the locking member 4 does not interfere with the installation of the container assembly 2 when the container assembly 2 is not mounted, the food preparation device includes a first locking assembly and a second locking assembly. When the container assembly 2 is mounted on the body 1, the locking member 4 may be driven to move by the first locking assembly and be fixed in a locked position. In the locked position, as shown in FIG. 8, the locking member 4 may enter the groove 141 and abut against the top of the limiting portion 241, so that the container assembly 2 is locked with the body 1. When the container assembly 2 needs to be removed, the locking member 4 may be driven to move by the second locking assembly and be fixed in an unlocked position. In the unlocked position, as shown in FIGS. 9 and 10, the locking member 4 moves out of the groove 141 to unlock the container assembly 2 from the body 1. The locking member 4 is kept in a position outside the groove 141 and does not block the installation of the container assembly 2, which facilitates the user to install the container assembly 2 again.

Specifically, as shown in FIGS. 8, 10 and 11, the first locking assembly includes a first reset member 51 and a releasing portion 52. The first reset member 51 is configured to drive the locking member 4 to move relative to the body 1 and move to the locked position. The releasing portion 52 is movably connected to the body 1, and the container assembly 2 can unlock the locking member 4 from the second locking assembly by driving the releasing portion 52 to move. When the container assembly 2 is not mounted on the body 1, the second locking assembly prevents the locking member 4 from resetting, that is, the locking member 4 is kept in the unlocked position, and the abutting portion 41 of the locking member 4 does not enter the groove 141, which ensures that the limiting portion 241 on the container assembly 2 maybe smoothly inserted into the groove 141, thereby realizing the container assembly 2 is placed onto the body 1. When the container assembly 2 is mounted on the body 1, the limiting portion 241 on the container assembly 2 abuts against the releasing portion 52 to cause the releasing portion 52 to move relative to the body 1. In this situation, the releasing portion 52 will unlock the locking part 4 from the second locking assembly, so that the locking part 4 will slide to the locked position relative to the body 1 under the action of the first reset member 51, and the abutting portion 41 will slide into the groove 141 and abuts the limiting portion 241 to complete the locking between the container assembly 2 and the body 1.

Optionally, the first reset member 51 may be a spring, such as a tension spring. One end of the tension spring may be connected to the upper casing 11 and the other end may be connected to the locking member 4, and the tension spring pulls the locking member 4 to the locked position.

In this embodiment, the releasing portion 52 can slide in a vertical direction relative to the body 1, which is beneficial to reducing the lateral size of the body 1, making the body 1 more compact. The releasing portion 52 is resettable and may automatically return to an initial position after the container assembly 2 is separated from the body 1, so that when the container assembly 2 is mounted again, the locking member 4 can be unlocked from the second locking assembly through the movement of the releasing portion 52, thereby simplifying the operation steps of the food preparation device.

Optionally, a stepped surface 1411 is provided in the groove 141. When the abutting portion 41 slides into the groove 141, the abutting portion 41 overlaps on the stepped surface 1411, thereby improving the positioning effect between the abutting portion 41 and the groove 141.

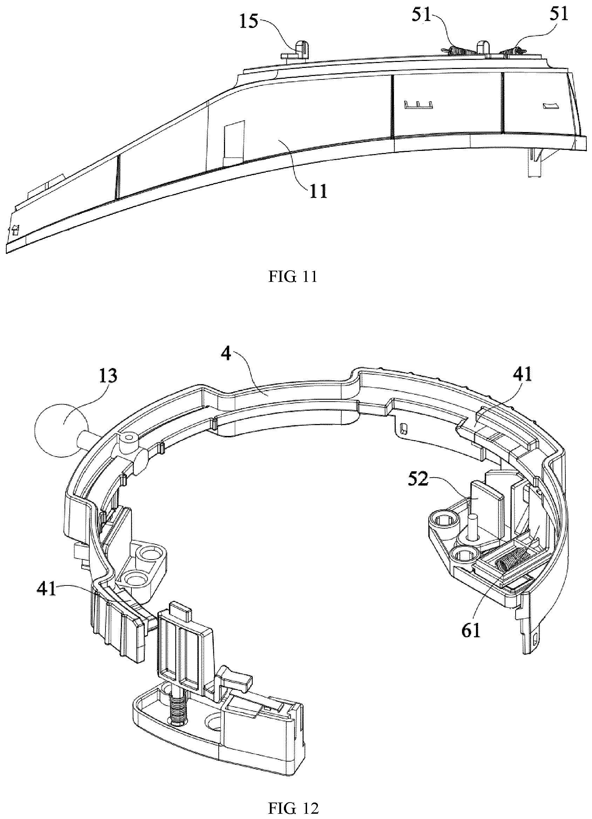

In order to avoid the deflection of the locking member 4 in the chamber, which may lead to inaccurate engagement between the abutting portion 41 and the limiting portion 241 and/or the protrusion 242, as shown in FIG. 11, a plurality of supporting blocks 15 are further provided on the upper casing 11. The supporting blocks 15 supports the locking member 4 to maintain the locking member 4 sliding horizontally. In order to reduce the abrasion between the supporting block 15 and the locking member 4, the supporting surface of the supporting block 15 may be a smooth arc surface, such that the contact area between the supporting surface and the locking member 4 is reduced, thereby reducing friction.

Specifically, as shown in FIGS. 12-15, a supporting plate 63 is provided in the upper housing 11 and located below the tray 14. The releasing portion 52 is slidably connected to the supporting plate 63, and the top of the releasing portion 52 may enter the groove 141 of the tray 14 so as to be engaged with the limiting portion 241. The releasing portion 52 and the supporting plate 63 are connected by a second reset member 53. The second reset member 53 may be a spring and drives the releasing portion 52 to move upward to reset.

In order to ensure the releasing portion 52 to reset stably, a first guide rod 522 slidably penetrated through the supporting plate 63 is provided on the releasing portion 52, the second reset member 53 is sleeved on the first guide rod 522, and two ends of the second reset member 53 abut against the releasing portion 52 and the supporting plate 63 respectively. By providing the first guide rod 522, it is possible to avoid deviation of the sliding direction of the releasing portion 52 caused by the distortion of the second reset member 53.

Optionally, a second guide rod 631 may be further provided on the supporting plate 63, and a guide hole 523 is provided on the releasing portion 52. The second guide rod 631 may be slidably penetrated through the guide hole 523 to further restrict the sliding direction of the releasing portion 52. In other embodiments, the second guide rod 631 may also be provided on the releasing portion 52, and correspondingly, the second guide rod 631 is slidably penetrated through the supporting plate 63.

In this embodiment, the second locking assembly includes a block 43 provided on the locking member 4. When the container assembly 2 is not mounted in the body 1, the locking member 4 is in the unlocked position, and the releasing portion 52 is raised under the action of the second reset member 53, causing the block 43 to abut on the abutting surface 524 on the right side of the releasing portion 52, so that the locking member 4 overcomes the force of the first reset member 51 and maintains in the unlocked position. By setting the block 43 to be engaged with the releasing portion 52, when the container assembly 2 is not mounted on the body 1, the body 1 is always in an unlocked state, which facilitates the engagement of the container assembly 2 with the body 1.

When the container assembly 2 is mounted into the body 1, the limiting portion 241 of the container assembly 2 presses the releasing portion 52, causing the releasing portion 52 to move downward and no longer abut against the block 43. The locking member 4 will reset under the action of the first reset member 51 and move to the locked position, causing the abutting portion 41 to be engaged with the limiting portion 241, and thus the container assembly 2 is locked.

In order to enable the block 43 to pass over the releasing portion 52 smoothly, the top of the releasing portion 52 is further provided with a first guide surface 525. The first guide surface 525 is an oblique surface that is inclined downward in a direction along which the locking member 4 moves towards the locked position. The first guide surface 525 can be slidably engaged with the block 43, which is beneficial to reducing the resistance of the locking member 4 when it is resetting.

Optionally, the second locking assembly further includes a toggle member 13 which is movably connected to the body 1. One end of the toggle member 13 is engaged with the locking member 4 and the other end extends out of the body 1 for the user to hold conveniently. When the container assembly 2 needs to be removed, the locking member 4 can be driven to move to the unlocked position by toggling the toggle member 13. At this time, the container assembly 2 has not been removed. Due to the weight of the container assembly 2 itself and the weight of the food inside the container assembly 2, the releasing portion 52 is still in a pressed state, which allows the block 43 to return to the unlocked position smoothly.

In order to enable the locking member 4 to be fixed in the unlocked position when the releasing portion 52 is in a pressed state, so that the user may remove the container assembly 2 conveniently after releasing the toggle member 13, the unlocking assembly is further provided with a resettable locking block 61 movably connected to the body 1.During the movement of the locking member 4 to the unlocked position driven by the toggle member 13, the locking block 61 can always abut against the locking member 4 until the locking member 4 moves to the unlocked position at which the locking block 61 maybe locked with the locking member 4, so that when the releasing portion 52 is in a pressed state, the locking member 4 may be held in the unlocked position by the engagement between the locking block 61 and the locking member 4.

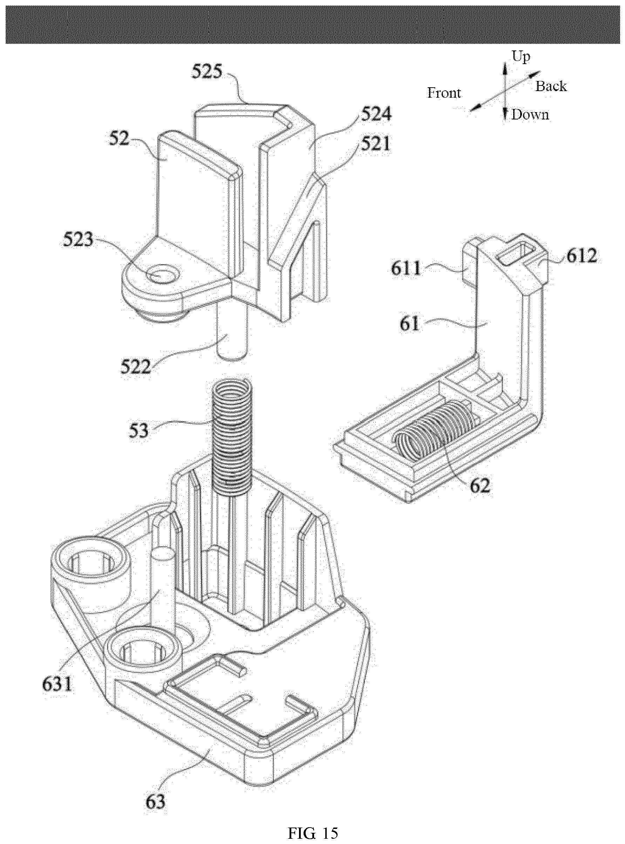

As shown in FIGS. 13 and 15, a protruding portion 612 is provided on a side of the locking block 61 towards the locking member 4, and a lock slot 42 is provided on the locking member 4. When the locking member 4 is in the unlocked position, the protruding portion 612 may snap into the lock slot 42 to perform pre-unlocking of the container assembly 2 and prevent the locking member 4 from resetting, so that the locking member 4 is kept in the unlocked position.

Specifically, the locking block 61 is slidably provided on the supporting plate 63, and the sliding direction thereof is the front-rear direction shown in FIG. 14. The locking block 61 is connected to the bottom of the tray 14 by a third reset member 62. The third reset member 62 may drive the locking block 61 to move in a direction approaching the locking member 4, so that the locking block 61 can be engaged with the locking member 4 after reset.

In this embodiment, the releasing portion 52 and the locking block 61 are both arranged on the inner side of the locking member 4, and the locking block 61 is driven by the third reset member 62 to move backward in the direction shown in FIG. 14 to be engaged with the locking member 4. During the movement of the locking member 4 towards the unlocked position driven by the toggle member 13, the locking block 61 always abuts against the inner wall of the locking member 4 under the action of the third reset member 62. When the locking member 4 moves to the unlocked position, the lock slot 42 is opposite to the protruding portion 612, and the locking block 61 will be moved to the rear side under the action of the third reset member 62, so that the protruding portion 612 maybe clipped into the lock slot 42. Optionally, the third reset member 62 may be a spring, such as a pressure spring.

After the container assembly 2 is removed, the releasing portion 52 is raised under the action of the second reset member 53, so that the block 43 abuts on the abutting surface 524, and further locks the locking member 4 in the unlocked position.

Since the locking block 61 is arranged to be engaged with the locking member 4, when the container assembly 2 is not mounted, the locking member 4 is locked in the unlocked position under a common action of the abutment between the block 43 and the abutting surface 524 and the engagement between the protruding portion 612 and the lock slot 42. When the container assembly 2 is mounted, through pressing the releasing portion 52 down by the limiting portion 241, only the abutting surface 524 of the releasing portion 52 is no longer in contact with the block 43, but the protruding portion 612 and the lock groove 42 are still in an engagement state. Therefore, the locking member 4 cannot be moved to the locked position under the action of the first reset member 51. For this reason, in this embodiment, after the container assembly 2 is removed, while being raised, the releasing portion 52 may also drive the locking block 61to move forward in the direction shown in FIG. 15, so that the protruding portion 612 slides out of the lock groove 42, and thus the locking member 4 is unlocked from the locking block 61.

Specifically, a second guide surface 521 is further provided on the side of the releasing portion 52 close to the locking block 61, and the locking block 61 is provided with a guide portion 611 capable of being slidably engaged with the second guide surface 521. The second guide surface 521 is an oblique surface which is inclined gradually downward in a direction away from the locking member 4, that is, from back to front.

When the container assembly 2 is removed, during raising of the releasing portion 52, the guide portion 611 on the locking block 61 always abuts on the second guide surface 521 under the action of the third reset member 62, and the guide portion 611 slides downward along the second guide surface 521 relative to the releasing portion 52, causing the locking block 61 as a whole to slide in the forward direction shown in FIG. 15, and the protruding portion 612 on the locking block 61 gradually slides out of the lock slot 42 on the locking member 4. After the releasing portion 52 has been fully raised, the protruding portion 612 is completely separated from the lock slot 42 and the releasing portion 52 abuts against the block 43 to achieve the locking to the locking member 4, so that the locking member 4 is still kept in the unlocked position.

When the container assembly 2 is mounted and the releasing portion 52 is pressed by the limiting portion 241, the releasing portion 52 moves downward, and the block 43 slides along the first guide surface 525, so that the locking member 4 is gradually reset to the locked position under the action of the first reset member 51. During this process, the guide portion 611 will move upward along the second guide surface 521 to cause the locking block 61 to move backward as a whole. Since the locking member 4 has been resetting, the lock slot 42 has been deviated from the protruding portion 612 of the locking block 61, which prevents the protruding portion 612 from being engaged with the lock slot 42, and thus the locking member 4 may move to the locked position smoothly.

### Embodiment 2

In this embodiment, a food preparation device is provided which is different from the food preparation device of the first embodiment in that, regarding to the food preparation device, whether the container assembly 2 is locked with the body 1 or not may be determined, and the food preparation device can be started only after the container assembly 2 is locked with the body, which ensures that the user can only start the food preparation device under the condition that the container assembly 2 is locked with the body 1.

The food preparation device further includes a trigger mechanism which may determine whether the container assembly 2 is locked with the body 1 or not. When the container assembly 2 is normally mounted on the body 1, the locking member 4 is moved to the locked position to lock the container assembly 2. At the same time, the trigger mechanism may be triggered by the locking member 4 in the locked position so as to obtain information that the container assembly 2 and the body 1 are already in a locked state.

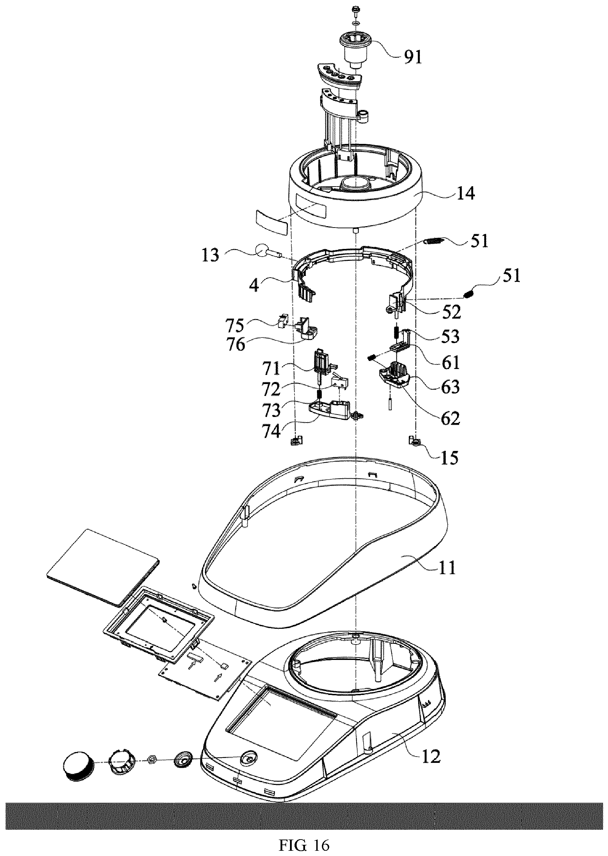

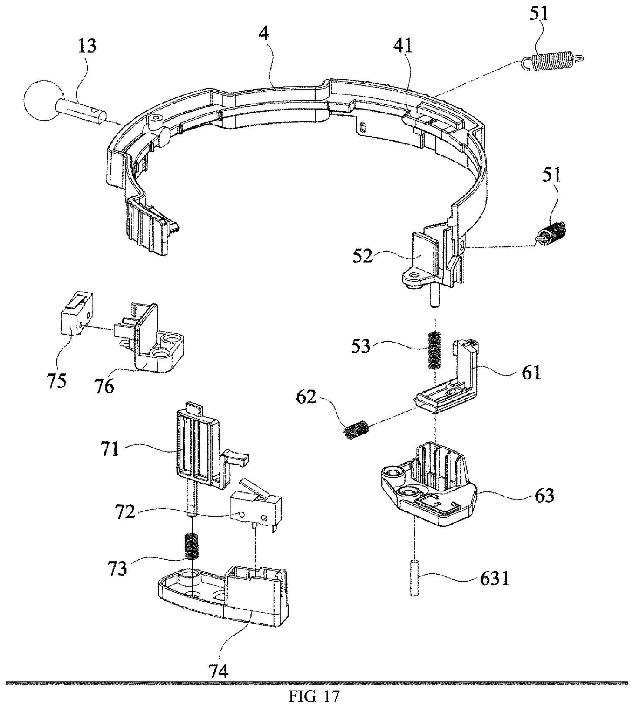

Specifically, as shown in FIGS. 16 and 17, the trigger mechanism includes a first sensing member 75 and a first bracket 76. The first bracket 76 is provided under the tray 14, and the first sensing member 75 is provided on the first bracket 76. When the locking member 4 moves to the locked position, the locking member 4 can trigger the first sensing member 75. Optionally, the first sensing member 75 may be a micro switch. When the locking member 4 moves to the locked position, the locking member 4 can abut against the reed of the micro switch to trigger the micro switch, the micro switch therefore acquires the information that the container assembly 2 and the body 1 are in the locked state, and the food preparation device may start to work normally according to the information.

Optionally, the control system of the food preparation device may be electrically connected to the trigger mechanism. When the reed of the micro switch is triggered, the micro switch obtains state information that the container assembly 2 and the body 1 are in the locked state, and transmits the state information to the control system. The control system acquires the locked state of the container assembly 2to the body 1 according to the received the information, and will control the food preparation device to work normally according to the user's input information.

Optionally, the control system may include a control button. When the user inputs a work instruction through the control button, the control system will determine whether the state information sent by the micro switch is received. If the information is received, the control system controls the food preparation device to execute work instructions. If the information is not received, the control system alarms to remind the user that the container assembly 2 is not locked with the body 1.

In other embodiments, the first sensing member 75 may be configured as contact sensor or proximity sensor which may implement the corresponding functions.

Optionally, regarding to the food preparation device, it may be also detected whether the cover 21 is normally closed on the container 22, so that the cover 21 or food in the container 22 may be avoided being thrown out due to the loosening of the cover 21 during the operation of the food preparation device, thereby improving the safety performance of the food preparation device.

Specifically, a triggering member 26 is provided on the container assembly 2. When the cover 21 is normally closed onto the container 22, the triggering member 26 can trigger the trigger mechanism in the body 1, otherwise, the triggering member 26 cannot trigger the trigger mechanism, such that whether the cover 21 and the container 22 are normally closed or not can be determined.

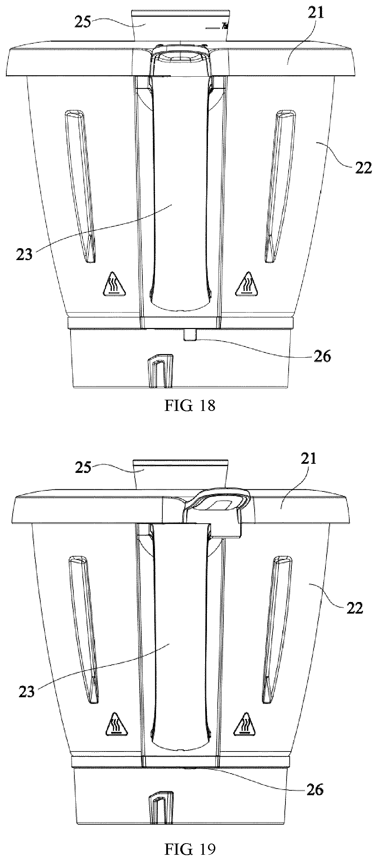

As shown in FIGS. 18 and 19, a triggering member 26 is provided on the container assembly 2, and can be provided in the handle 23. When the cover 21 is normally closed onto the container 22, as shown in FIG. 18, the triggering member 26 extends out of the handle 23 for a relatively longer length to trigger the trigger mechanism on the body 1, so that information that the cover 21 has already been normally mounted on the container 22 may be generated. When the cover 21 is not normally closed onto the container 22, as shown in FIG. 19, the triggering member 26 extends out of the handle 23 for a relatively shorter length, and thus the triggering member 26 cannot trigger the trigger mechanism on the body 1, thereby determining that the cover 21 is not normally closed onto the container 22.

As shown in FIG. 17, the trigger mechanism further includes a second sensing member 72. Optionally, the second sensing member 72 may be a micro switch. When the cover 21 is normally closed onto the container 22 and the container assembly 2 is mounted on the body 1, the triggering member 26 can abut on the reed of the second sensing member 72, such that the second sensing member 72 acquires a state signal indicating the container assembly 2 is mounted.

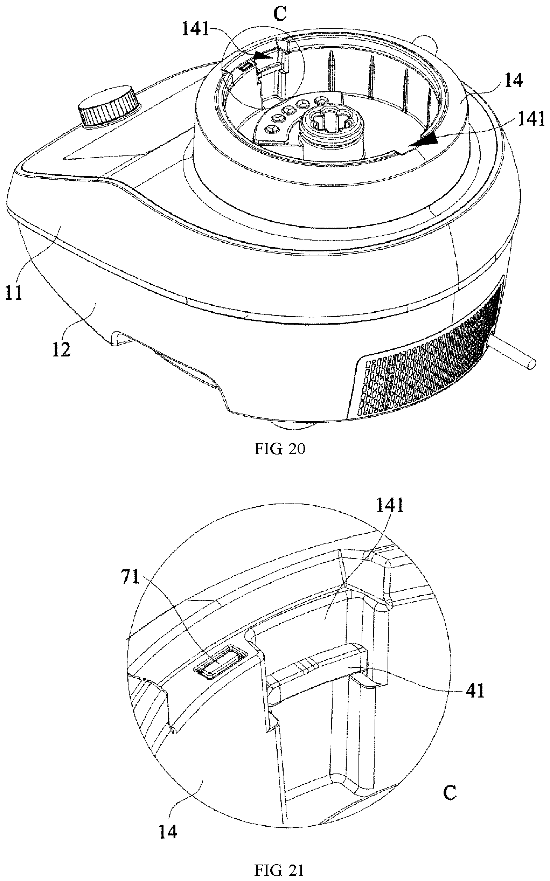

In order to facilitate the engagement between the triggering member 26 and the second sensing member 72, the trigger mechanism may further include a resettable adapter 71slidably provided in the chamber of the tray 14, as shown in FIG. 17, FIG. 20 and FIG. 21. One end of the adapter 71 penetrates through the tray 14 and can abut against the trigger 26, and the other end can be driven by the triggering member 26 to abut against the reed of the second sensing member 72 so as to trigger the trigger mechanism. When the cover21 is normally closed onto the container 22 and the container assembly 2 is mounted on the body 1, the triggering member 26 presses down the adapter 71, and thus the adapter 71 can abut against the reed of the second sensing member 72, such that the second sensing member 72 acquires the state signal indicating the container assembly 2 is mounted.

When the triggering member 26 no longer abuts against the adapter 71, the adapter 71 is automatically reset and separated from the reed of the second sensing member 72, causing the second sensing member 72 not to be triggered and indicating that the cover 21 is not normally closed onto the container 22.

The second sensing member 72 and the adapter 71 can be provided in a chamber of the tray 14, and the space between the inner plate 143 and the outer plate 144 in the tray 14 is reasonably utilized, so that the structure of the food preparation device is more compact.

Specifically, as shown in FIG. 17, the trigger mechanism further includes a second bracket 74, and both the adapter 71 and the second sensing member 72 can be provided on the second bracket 74. A fourth reset member 73 is provided between the adapter 71 and the second bracket 74. The fourth reset member 73 abuts on the second bracket 74 and the adapter 71 by its two ends respectively to drive the adapter 71 to extend out of the tray 14, so that the adapter 71 may be engaged with the triggering member 26. Optionally, the fourth reset member 73 may be a spring. A contact end is further provided on the adapter 71. During the upward and downward sliding of the adapter 71, the adapter 71 can drive the contact end to abut against or separate from the reed of the second sensing member 72.

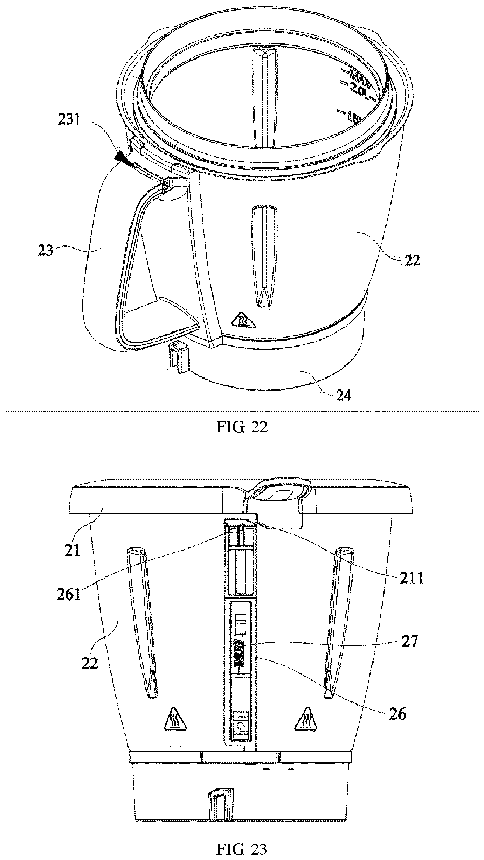

In order to enable the triggering member 26 to move with the engagement state between the cover 21 and the container 22, as shown in FIGS. 22 and 23, a notch 231 is provided on the handle 23, a first inclined surface 211 is provided on the cover 21, the triggering member 26 is resetably provided on the container 22 and is provided with a second inclined surface 261, and the cover 21 is closed onto the container 22 in a rotating manner. When the cover 21 rotates relative to the container 22, the first inclined surface 211 on the cover 21 can be slidably engaged with the second inclined surface 261 on the triggering member 26 through the notch 231 to drive the triggering member 26 to move.

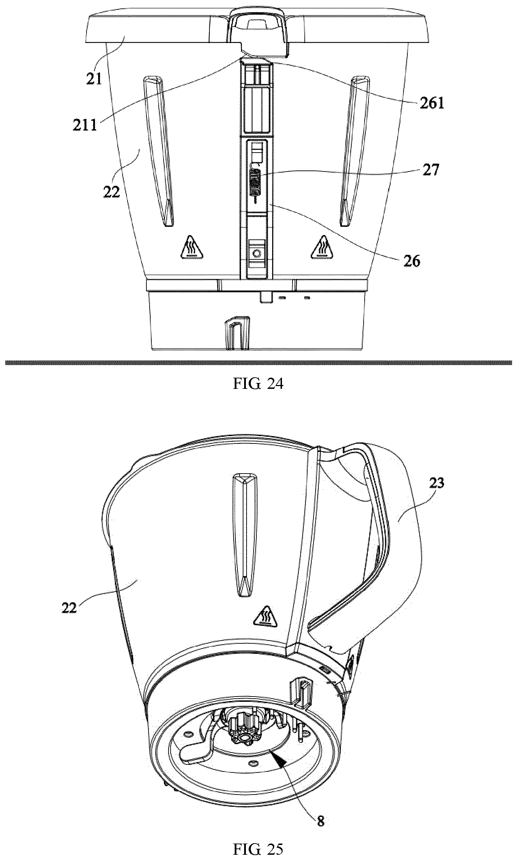

As shown in FIG. 23, when the cover 21 is not closed onto the container 22, the triggering member 26 may be retracted into the handle 23 under the action of the fifth reset member 27. As shown in FIG. 24, when the cover 21 rotates relative to the container 22 to close it onto the container 22, the first inclined surface 211 on the cover 21 can be slidably engaged with the second inclined surface 261 on the triggering member 26, and push the triggering member 26 to slide downwards, such that the bottom end of the triggering member 26 gradually extends out of the handle 23 so as to abut against the adapter 71.

Optionally, after receiving the user's work instruction, until that the cover 21 is closed onto the container 22 normally and that the container assembly 2 and the body 1 are in a locked state are detected, the food preparation device executes the work instruction. That is, only after the locking member 4 triggers the first sensing member 71, and the triggering member 26 triggers the second sensing member 72, the food preparation device executes the work instruction, which further improves the safety performance of the food preparation device.

### Embodiment 3

In order to avoid a danger caused by using the food preparation device of which the cutting tool assembly 8 is not normally installed onto the container assembly 2 when the container assembly 2 is placed on the body 1, one other food preparation device is provided in the embodiment 3 which is different from the food preparation devices of the above embodiments in that, the food preparation device of the embodiment 3 further includes a detection assembly. The detection assembly may detect the mounting state of the cutting tool assembly 8 onto the container assembly 2, so as to prevent the food preparation device from starting when the cutting tool assembly 8 is in an abnormal mounting state.

Specifically, the detection assembly includes a sensing element and a to-be-sensed element. The sensing element can be provided in the tray 14 of the body 1, and the to-be-sensed element can be provided on a transmission end of the cutting tool assembly 8. When the transmission end is normally matched with the driving assembly, the to-be-sensed element is located within the detection range of the sensing element. Until the detection assembly detects that the cutting tool assembly 8 has been normally mounted, the food preparation device can be started to work normally.

Optionally, the to-be-sensed element may be a magnetic member, and the sensing element may be a Hall sensor or a dry-reed switch, so that the detection assembly maybe magnetic detection type. The dry-reed switch, also called as a reed switch or a magnetic reed switch, is a magnetically sensitive switch and usually includes two metal reed contacts which are made of a soft magnetic material and disconnected when there is no magnetism. In an example in which the dry-reed switch is used, when the magnetic member moves into the sensing range of the dry-reed switch, the two contacts in the dry-reed switch are in contact, and the dry-reed switch is switched on, so that it can be detected that the cutting tool assembly 8 has been mounted in position. Otherwise, the cutting tool assembly 8 is not mounted normally, and the magnetic member is located outside the sensing range of the dry-reed switch, in this case, the two contacts of the reed switch are not in contact, and thus the dry-reed switch is switched off.

In other embodiments, the detection assembly may be configured as a contact sensor or a proximity sensor. The receiving end of the sensor may serve as the sensing element, and the transmission end of the sensor may serve as the to-be-sensed element, so that the sensor may be also used to detect whether the cutting tool assembly 8 is mounted in position or not.

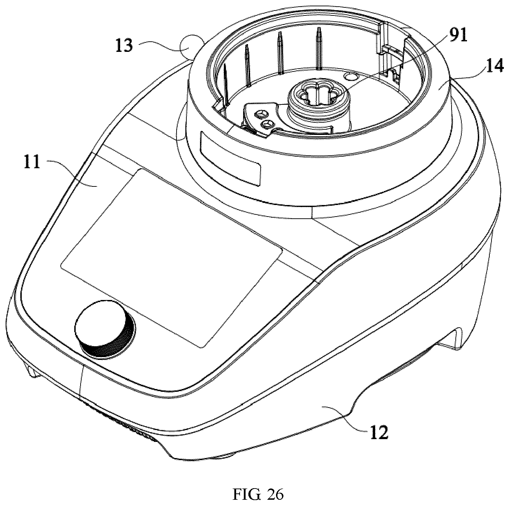

Specifically, as shown in FIG. 25, after the cutting tool assembly 8 is mounted in the container assembly 2, the transmission end of the cutting tool assembly 8 extends out of the container assembly 2. As shown in FIG. 26, the driving assembly includes a transmission seat 91 extending into the tray 14.The cutting tool assembly 8 extending out of the container assembly 2 is connected to the transmission seat 91 by the transmission end thereof to be driven to rotate.

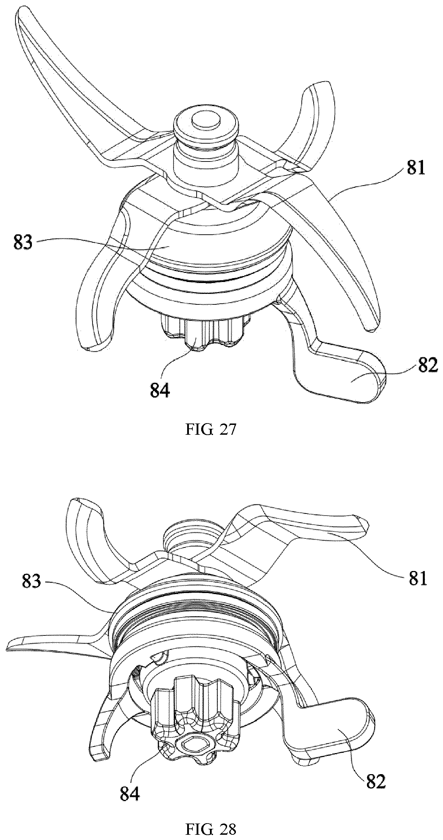

As shown in FIGS. 27 and 28, the cutting tool assembly 8 includes a cutting tool 81 and a cutting tool seat 83. The cutting tool seat 83 is detachably mounted at the bottom of the container assembly 2. The cutting tool 81 includes a rotating shaft and a blade. The rotating shaft of the cutting tool 81 is rotatably arranged in the cutting tool seat 83, with the bottom end thereof extending out of the cutting tool seat 83 and connected to a transmission end. Optionally, the transmission end may be provided with a spline 84. The blade and the spline 84 are respectively located on two sides of a mounting seat. After the cutting tool assembly 8 is assembled with the container assembly 2, the cutting tool 81 is located in the container 22, and the spline 84 extends out of the container assembly 2 to be connected to the transmission base 91.

In this embodiment, a locking element 82 of the cutting tool is further fixedly connected onto the cutting tool seat 83 and is detachably fixed on the cutting tool 81. When the cutting tool assembly 8 is mounted, the cutting tool assembly 8 is mounted from the inner side of the container 22, a limiting portion 241 provided on the upper end of the cutting tool seat 83 abuts against the inner side of the container 22, and the lower end of the cutting tool seat 83 and the transmission end extend out of the container assembly 2. Then the locking element 82 of the cutting tool is fixed onto the cutting tool seat 83 and is engaged with the limiting portion 241 to fix the cutting tool assembly 8 onto the container assembly 2.

Optionally, the locking element 82 of the cutting tool is fixed onto the cutting tool seat 83 in a screwing manner, for example, the locking element 82 of the cutting tool is fixed to the cutting tool seat 83 by a threaded connection. The magnetic member may be provided on the lock cutting tool element 82. When the cutting tool assembly 8 is normally mounted onto the container assembly 2 through the locking element 82 of the cutting tool, the locking element 82 of the cutting tool is rotated to a specified angle relative to the body 1, so that the magnetic member on the locking element 82 of the cutting tool enters the sensing range of the sensing element.

## Claims

1. A food preparation device, comprising a body (1) and a container assembly (2), **characterized in that**, a locking member (4) is movably connected to the body (1), and the locking member (4) is configured to be driven by the container assembly (2) to rotate in a circumferential direction of the body (1) when the container assembly (2) is pressed towards the body (1) in a mounting direction to be mounted on the body (1), so as to lock the container assembly (2) onto the body (1).

2. The food preparation device of claim 1, wherein the container assembly (2) is mounted vertically into the body (1), a limiting portion (241) is convexly provided on a side wall of the container assembly (2), the locking member (4) has an abutting portion (41), and the abutting portion (41) is capable of extending into or out of an upper part of the limiting portion (241) during rotation of the locking member (4);
preferably, a mounting groove configured to accommodate a bottom of the container assembly (2) is provided on the body (1), a groove (141) capable of accommodating the limiting portion (241) is provided on an inner side of the mounting groove, and the abutting portion (41) is capable of extending into or out of the groove (141).

3. The food preparation device of claim 1, further comprising:
a first locking assembly, wherein when the container assembly (2) is mounted on the body (1), the first locking assembly is configured to drive the locking member (4) to rotate until the locking member (4) is fixed in a locked position, such that the container assembly (2) and the body (1) are in a locked state; and
a second locking assembly that is configured to drive the locking member (4) to rotate until the locking member (4) is fixed in an unlocked position, such that the container assembly (2) and the body (1) are in an unlocked state.

4. The food preparation device of claim 3, wherein the first locking assembly comprises:
a first reset member (51), configured to drive the locking member (4) to rotate to the locked position relative to the body (1); and
a releasing portion (52), movably connected to the body (1), wherein when the container assembly (2) is mounted on the body (1), the releasing portion (52) is driven by the container assembly (2) to move, so as to unlock the locking member (4) from the second locking assembly.

5. The food preparation device of claim 4, wherein the second locking assembly comprises:
a block (43) provided on the locking member (4), wherein when the locking member (4) is in the unlocked position, the block (43) is capable of abutting against the releasing portion (52) to prevent the first reset member (51) from driving the locking member (4) to reset;
preferably, the releasing portion (52) is resettable and is capable of moving in a vertical direction relative to the body (1);
preferably, a first guide surface (525) is provided on a top of the releasing portion (52), and the first guide surface (525) is inclined downward in a locking direction of the locking member (4).

6. The food preparation device of claim 5, wherein the second locking assembly further comprises:
a toggle member (13), wherein one end of the toggle member (13) is connected to the locking member (4), and the other end extends out of the body (1); and
a resettable locking block (61) movably connected to the body (1), wherein when the toggle member (13) drives the locking member (4) to move to the unlocked position, the locking block (61) is capable of being reset and being locked with the locking member (4);
preferably, when the releasing portion (52) is driven by the container assembly (2) to move, the releasing portion (52) is capable of driving the locking block (61) to separate from the locking member (4).

7. The food preparation device of claim 6, wherein a second guide surface (521) is provided on the releasing portion (52), and a guide portion (611) slidably matched with the second guide surface (521) is provided on the locking block (61), when the releasing portion (52)is driven by the container assembly (2) to move, the guide portion (611) slides along the second guide surface (521) to move away from the locking member (4).

8. The food preparation device of claim 6, wherein a protruding portion (612) is provided on the locking block (61), a lock slot (42) is provided on the locking member (4), and when the locking member (4) rotates to the unlocked position, the protruding portion (612) is capable of being clipped into the lock slot (42).

9. The food preparation device of any one of claims 1-8, wherein the food preparation device further comprises:
a cutting tool assembly (8) mounted on the container assembly (2), wherein a transmission end of the cutting tool assembly (8) extends out of the container assembly (2) and can be connected to a driving assembly inside the body (1); and
a detection assembly configured to be capable of detecting a mounting state between the cutting tool assembly (8) and the container assembly (2).

10. The food preparation device of claim 9, wherein the detection assembly comprises:
a sensing element provided on the body (1); and
a to-be-sensed element provided on the transmission end, wherein when the container assembly (2) is mounted on the body (1), and the cutting tool assembly (8) and the container assembly (2) are normally mounted, the to-be-sensed element is located within a detection range of the sensing element;
preferably, the to-be-sensed element is a magnetic member, and the sensing element is a Hall sensor or a dry-reed switch.

11. The food preparation device of claim 10, wherein the food preparation device further comprises:
a locking element (82) of the cutting tool detachably connected to the transmission end and fixing the cutting tool (8) onto the container assembly (2), and the to-be-sensed element being provided on the locking element (82) of the cutting tool.

12. The food preparation device of any one of claims 1-8, wherein a trigger mechanism is provided in the body (1), and the trigger mechanism is configured to be capable of detecting whether the container assembly (2) and the body (1) are in a locked state or not; preferably, the trigger mechanism comprises a first sensing member (75), wherein when the locking member (4) locks the body (1) and the container assembly (2) together, the locking member (4) is capable of triggering the first sensing member (75).

13. The food preparation device of any one of claims 1-8, wherein the container assembly (2) comprises a main body and a cover (21) capable of being matched with the main body, a trigger mechanism is provided in the body (1), and the trigger mechanism is configured to be capable of detecting a mounting state of the cover (21) on the main body of the container assembly (2) mounted on the body (1).

14. The food preparation device of claim 13, wherein a triggering member (26) is movably connected to the main body, and the triggering mechanism comprises a second sensing member (72); after the cover (21) is assembled in position with the main body, the cover (21) drives the triggering member (26) to move to trigger the second sensing member (72);
preferably, the triggering member (26) is slidably connected to the main body and resettable.

15. The food preparation device of claim 14, wherein the cover (21) is rotatably matched with the main body, a first inclined surface (211) is provided on the cover (21), and a second inclined surface (261) is provided on the triggering member (26);
when the cover (21) rotates in a first direction relative to the main body, the first inclined surface (211) slides along the second inclined surface (261) and pushes the triggering member (26) to slide;
when the cover (21) rotates in a second direction relative to the main body, the first inclined surface (211) is gradually separated from the second inclined surface (261), and the triggering member (26) is reset.

## Patentansprüche

1. Speisenzubereitungsvorrichtung, umfassend einen Körper (1) und eine Behälteranordnung (2), die **dadurch gekennzeichnet ist, dass** ein Arretierungselement (4) mit dem Körper (1) bewegbar verbunden ist, und das Arretierungselement (4) ausgelegt ist, um durch die Behälteranordnung (2) angetrieben zu werden, um in eine Umfangsrichtung des Körpers (1) zu rotieren, wenn die Behälteranordnung (2) in Richtung des Körpers (1) in eine Befestigungsrichtung gedrückt wird, um auf dem Körper (1) befestigt zu werden, um die Behälteranordnung (2) auf dem Körper (1) zu arretieren.

2. Speisenzubereitungsvorrichtung nach Anspruch 1, wobei die Behälteranordnung (2) vertikal in den Körper (1) befestigt ist, ein Begrenzungsabschnitt (241) konvex auf einer Seitenwand der Behälteranordnung (2) bereitgestellt ist, das Arretierungselement (4) einen anliegenden Abschnitt (41) aufweist, und wobei der anliegende Abschnitt (41) dazu in der Lage ist, sich während der Drehung des Arretierungselements (4) in einen oberen Teil des Begrenzungsabschnitts (241) hinein oder aus diesem heraus zu erstrecken;
wobei vorzugsweise eine Befestigungsrille, die ausgelegt ist, um eine Unterseite der Behälteranordnung (2) aufzunehmen, auf dem Körper (1) bereitgestellt ist, eine Rille (141), die dazu in der Lage ist, den Begrenzungsabschnitt (241) aufzunehmen, auf einer Innenseite der Befestigungsrille bereitgestellt ist, und der anliegende Bereich (41) dazu in der Lage ist, sich in die Rille (141) hinein oder aus dieser heraus zu erstrecken.

3. Speisenzubereitungsvorrichtung nach Anspruch 1, die ferner Folgendes umfasst:
eine erste Arretierungsanordnung, wobei, wenn die Behälteranordnung (2) auf dem Körper (1) befestigt wird, die erste Arretierungsanordnung ausgelegt ist, um das Arretierungselement (4) anzutreiben, um zu rotieren, bis das Arretierungselement (4) in einer verriegelten Position fixiert ist, sodass sich die Behälteranordnung (2) und der Körper (1) in einem verriegelten Zustand befinden; und
eine zweite Arretierungsanordnung, die ausgelegt ist, um das Arretierungselement (4) anzutreiben, um zu rotieren, bis das Arretierungselement (4) in einer nichtverriegelten Position fixiert ist, sodass sich die Behälteranordnung (2) und der Körper (1) in einem nichtverriegelten Zustand befinden.

4. Speisenzubereitungsvorrichtung nach Anspruch 3, wobei die erste Arretierungsanordnung Folgendes umfasst:
ein erstes Rückstellelement (51), das ausgelegt ist, um das Arretierungselement (4) anzutreiben, um relativ zum Körper (1) in die verriegelte Position zu rotieren; und
einen Löseabschnitt (52), der mit dem Körper (1) bewegbar verbunden ist, wobei, wenn die Behälteranordnung (2) auf dem Körper (1) befestigt wird, der Löseabschnitt (52) durch die Behälteranordnung (2) angetrieben wird, um sich zu bewegen, um das Arretierungselement (4) von der zweiten Arretierungsanordnung zu lösen.

5. Speisenzubereitungsvorrichtung nach Anspruch 4, wobei die zweite Arretierungsanordnung Folgendes umfasst:
einen Block (43), der auf dem Arretierungselement (4) bereitgestellt ist, wobei, wenn sich das Arretierungselement (4) in der nichtverriegelten Position befindet, der Block (43) dazu in der Lage ist, gegen den Löseabschnitt (52) anzuliegen, um zu verhindern, dass das erste Rückstellelement (51) das Arretierungselement (4) zur Rückstellung antreibt;
wobei der Löseabschnitt (52) vorzugsweise rückstellbar ist und dazu in der Lage ist, sich in eine vertikale Richtung relativ zum Körper (1) zu bewegen;
eine erste Führungsoberfläche (52), die vorzugsweise auf dem Löseabschnitt (52) bereitgestellt ist, und wobei die erste Führungsoberfläche (525) nach unten in eine Arretierungsrichtung des Arretierungselements (4) geneigt ist.

6. Speisenzubereitungsvorrichtung nach Anspruch 5, wobei die zweite Arretierungsanordnung ferner Folgendes umfasst:
ein Umschaltelement (13), wobei ein Ende des Umschaltelements (13) mit dem Arretierungselement (4) verbunden ist, und sich das andere Ende aus dem Körper (1) heraus erstreckt; und
einen rückstellbaren Arretierungsblock (61), der mit dem Körper (1) bewegbar verbunden ist, wobei, wenn das Umschaltelement (13) das Arretierungselement (4) antreibt, um sich in die nichtverriegelte Position zu bewegen, der Arretierungsblock (61) dazu in der Lage ist, rückgestellt zu werden und mit dem Arretierungselement (4) verriegelt zu werden;
wobei der Löseabschnitt (52) vorzugsweise dazu in der Lage ist, den Arretierungsblock (61) anzutreiben, um sich von dem Arretierungselement (4) zu trennen, wenn der Löseabschnitt (52) durch die Behälteranordnung (2) angetrieben wird, um sich zu bewegen.

7. Speisenzubereitungsvorrichtung nach Anspruch 6, wobei eine zweite Führungsoberfläche (521) auf dem Löseabschnitt (52) bereitgestellt ist, und ein Führungsabschnitt (611), der gleitbar an die zweite Führungsoberfläche (521) angepasst ist, auf dem Arretierungsblock (61) bereitgestellt ist, wobei der Führungsabschnitt (611) entlang der zweiten Führungsoberfläche (521) gleitet, um sich von dem Arretierungselement (4) weg zu bewegen, wenn der Löseabschnitt (52) von der Behälteranordnung (2) angetrieben wird, um sich zu bewegen.

8. Speisenzubereitungsvorrichtung nach Anspruch 6, wobei ein hervorstehender Abschnitt (612) auf dem Arretierungsblock (61) bereitgestellt ist, ein Arretierungsschlitz (42) auf dem Arretierungselement (4) bereitgestellt ist, und wobei der hervorstehende Abschnitt (612) dazu in der Lage ist, in den Arretierungsschlitz (42) geschnappt zu werden, wenn das Arretierungselement (2) in die nichtverriegelte Position rotiert.

9. Speisenzubereitungsvorrichtung nach einem der Ansprüche 1 bis 8, wobei die Speisenzubereitungsvorrichtung ferner Folgendes umfasst:
eine Schneidwerkzeuganordnung (8), die auf der Behälteranordnung (2) montiert ist, wobei sich ein Getriebeende der Schneidwerkzeuganordnung (8) aus der Behälteranordnung (2) heraus erstreckt, mit einer Antriebsanordnung innerhalb des Körpers (1) verbunden werden kann; und
eine Detektionsanordnung, die ausgelegt ist, um dazu in der Lage zu sein, einen Befestigungszustand zwischen der Schneidwerkzeuganordnung (8) und der Behälteranordnung (2) zu detektieren.

10. Speisenzubereitungsvorrichtung nach Anspruch 9, wobei die Detektionsanordnung Folgendes umfasst:
ein Abfühlelement, das auf dem Körper (1) bereitgestellt ist; und
ein abzufühlendes Element, das auf dem Getriebeende bereitgestellt ist, wobei, wenn die Behälteranordnung (2) auf dem Körper (1) befestigt ist, und die Schneidwerkzeuganordnung (8) und die Behälteranordnung (2) normal befestigt sind, das abzufühlende Element innerhalb eines Detektionsbereichs des Abfühlelements positioniert ist;
wobei das abzufühlende Element vorzugsweise ein magnetisches Element ist, und das Abfühlelement ein Hall-Sensor oder ein trockener Reed-Schalter ist.

11. Speisenzubereitungsvorrichtung nach Anspruch 10, wobei die Speisenzubereitungsvorrichtung ferner Folgendes umfasst:
ein Arretierungselement (82) des Schneidwerkzeugs, das abnehmbar mit dem Getriebeende verbunden ist und das Schneidwerkzeug (8) auf der Behälteranordnung (2) befestigt, und wobei das abzufühlende Element auf dem Arretierungselement (82) des Schneidwerkzeugs bereitgestellt ist.

12. Speisenzubereitungsvorrichtung nach einem der Ansprüche 1 bis 8, wobei ein Auslösemechanismus in dem Körper (1) bereitgestellt ist, und wobei der Auslösemechanismus ausgelegt ist, um dazu in der Lage zu sein, zu detektieren, ob sich die Behälteranordnung (2) und der Körper (1) in einem verriegelten Zustand befinden oder nicht;
wobei der Auslösemechanismus vorzugsweise ein erstes Abfühlelement (75) umfasst, wobei, wenn das Arretierungselement (4) den Körper (1) und die Behälteranordnung (2) aneinander verriegelt, das Arretierungselement (4) dazu in der Lage ist, das erste Abfühlelement (75) auszulösen.

13. Speisenzubereitungsvorrichtung nach einem der Ansprüche 1 bis 8, wobei die Behälteranordnung (2) einen Hauptkörper und eine Abdeckung (21) umfasst, die dazu in der Lage ist, zu dem Hauptkörper zu passen, wobei ein Auslösemechanismus in dem Körper (1) bereitgestellt ist, und der Auslösemechanismus ausgelegt ist, um dazu in der Lage zu sein, einen Befestigungszustand der Abdeckung (21) auf dem Hauptkörper der Behälteranordnung (2), die auf dem Körper (1) montiert ist, zu detektieren.

14. Speisenzubereitungsvorrichtung nach Anspruch 13, wobei ein Auslöseelement (26) mit dem Hauptkörper bewegbar verbunden ist, und der Auslösemechanismus ein zweites Abfühlelement (72) umfasst; wobei die Abdeckung (21) das Auslöseelement (26) antreibt, sich zu bewegen, um das zweite Abfühlelement (72) auszulösen, nachdem die Abdeckung (21) in Position mit dem Hauptkörper angeordnet wurde;
wobei das Auslöseelement (26) vorzugsweise verschiebbar mit dem Hauptkörper verbunden und rückstellbar ist.

15. Speisenzubereitungsvorrichtung nach Anspruch 14, wobei die Abdeckung (21) rotierbar an den Hauptkörper angepasst ist, wobei eine erste geneigte Oberfläche (211) auf der Abdeckung (21) bereitgestellt ist, und eine zweite geneigte Oberfläche (261) auf dem Auslöseelement (26) bereitgestellt ist;
wobei, wenn die Abdeckung (21) relativ zu dem Hauptkörper in eine erste Richtung rotiert, die erste geneigte Oberfläche (211) entlang der zweiten geneigten Oberfläche (261) gleitet und das Auslöseelement (26) verschiebt, sodass es gleitet;
wobei, wenn die Abdeckung (21) relativ zu dem Hauptkörper in eine zweite Richtung rotiert, die erste geneigte Oberfläche (211) allmählich von der zweiten geneigten Oberfläche (261) getrennt wird und das Auslöseelement (26) rückgestellt wird.

## Revendications

1. Dispositif de préparation de cuisine comprenant un corps (1) et un ensemble de récipient (2), **caractérisé en ce qu'**un élément de verrouillage (4) est raccordé, de manière mobile, au corps (1), et l'élément de verrouillage (4) est configuré pour être entraîné, par l'ensemble de récipient (2), à tourner dans une direction circonférentielle du corps (1), lorsque l'ensemble de récipient (2) est comprimé vers le corps (1) dans une direction de montage pour être monté sur le corps (1), afin de verrouiller l'ensemble de récipient (2) sur le corps (1).

2. Dispositif de préparation de cuisine selon la revendication 1, dans lequel l'ensemble de récipient (2) est monté verticalement dans le corps (1), une partie de limitation (241) est prévue, de manière convexe, sur une paroi latérale de l'ensemble de récipient (2), l'élément de verrouillage (4) a une partie de butée (41), et la partie de butée (41) peut s'étendre dans ou hors d'une partie supérieure de la partie de limitation (241) pendant la rotation de l'élément de verrouillage (4) ;
de préférence, une rainure de montage configurée pour loger un fond de l'ensemble de récipient (2) est prévue sur le corps (1), une rainure (141) pouvant loger la partie de limitation (241) est prévue sur un côté interne de la rainure de montage, et la partie de butée (41) peut s'étendre dans ou hors de la rainure (141).

3. Dispositif de préparation de cuisine selon la revendication 1, comprenant en outre :
un premier ensemble de verrouillage, dans lequel lorsque l'ensemble de récipient (2) est monté sur le corps (1), le premier ensemble de verrouillage est configuré pour entraîner l'élément de verrouillage (4) à tourner jusqu'à ce que l'élément de verrouillage (4) soit fixé dans une position verrouillée, de sorte que l'ensemble de récipient (2) et le corps (1) sont dans un état verrouillé ; et
un second ensemble de verrouillage qui est configuré pour entraîner l'élément de verrouillage (4) à tourner jusqu'à ce que l'élément de verrouillage (4) soit fixé dans une position déverrouillée, de sorte que l'ensemble de récipient (2) et le corps (1) sont dans un état déverrouillé.

4. Dispositif de préparation de cuisine selon la revendication 3, dans lequel le premier ensemble de verrouillage comprend :
un premier élément de réinitialisation (51) configuré pour entraîner l'élément de verrouillage (4) à tourner dans la position verrouillée par rapport au corps (1) ; et
une partie de libération (52), raccordée de manière mobile au corps (1), dans lequel lorsque l'ensemble de récipient (2) est monté sur le corps (1), la partie de libération (52) est entraînée par l'ensemble de récipient (2) pour qu'il se déplace, afin de déverrouiller l'élément de verrouillage (4) du second ensemble de verrouillage.

5. Dispositif de préparation de cuisine selon la revendication 4, dans lequel le second ensemble de verrouillage comprend :
un bloc (43) prévu sur l'élément de verrouillage (4), dans lequel lorsque l'élément de verrouillage (4) est dans la position déverrouillée, le bloc (43) peut venir en butée contre la partie de libération (52) pour empêcher le premier élément de réinitialisation (51) d'entraîner l'élément de verrouillage (4) à réaliser la réinitialisation ;
de préférence, la partie de libération (52) peut être réinitialisé et peut se déplacer dans une direction verticale par rapport au corps (1) ;
de préférence, une première partie de guidage (525) est prévue sur un sommet de la partie de libération (52), et la première surface de guidage (525) est inclinée vers le bas dans une direction de verrouillage de l'élément de verrouillage (4).

6. Dispositif de préparation de cuisine selon la revendication 5, dans lequel le second ensemble de verrouillage comprend en outre :
un élément à bascule (13), dans lequel une extrémité de l'élément à bascule (13) est raccordée à l'élément de verrouillage (4) et l'autre extrémité s'étend hors du corps (1) ; et
un bloc de verrouillage (61) pouvant être réinitialisé raccordé de manière mobile au corps (1), dans lequel lorsque l'élément à bascule (13) entraîne l'élément de verrouillage (4) à se déplacer dans la position déverrouillée, le bloc de verrouillage (61) peut être réinitialisé et être verrouillé avec l'élément de verrouillage (4) ;
de préférence, lorsque la partie de libération (52) est entraînée par l'ensemble de récipient (2) pour qu'elle se déplace, la partie de libération (52) peut entraîner le bloc de verrouillage (61) à se séparer de l'élément de verrouillage (4) .

7. Dispositif de préparation de cuisine selon la revendication 6, dans lequel une seconde surface de guidage (521) est prévue sur la partie de libération (52), et une partie de guidage (611) correspondant de manière coulissante à la seconde surface de guidage (521) est prévue sur le bloc de verrouillage (61), lorsque la partie de libération (52) est entraînée par l'ensemble de récipient (2) pour qu'elle se déplace, la partie de guidage (611) coulisse le long de la seconde surface de guidage (521) pour se déplacer à l'opposé de l'élément de verrouillage (4).

8. Dispositif de préparation de cuisine selon la revendication 6, dans lequel une partie en saillie (612) est prévue sur le bloc de verrouillage (61), une fente de verrou (42) est prévue sur l'élément de verrouillage (4), et lorsque l'élément de verrouillage (4) tourne dans la position déverrouillée, la partie en saillie (612) peut être clipsée dans la fente de verrou (42).

9. Dispositif de préparation de cuisine selon l'une quelconque des revendications 1 à 8, dans lequel le dispositif de préparation de cuisine comprend en outre :
un ensemble d'outil de coupe (8) monté sur l'ensemble de récipient (2), dans lequel une extrémité de transmission de l'ensemble d'outil de coupe (8) s'étend hors de l'ensemble de récipient (2) et peut être raccordée à un ensemble d'entraînement à l'intérieur du corps (1) ; et
un ensemble de détection configuré pour pouvoir détecter un état de montage entre l'ensemble d'outil de coupe (8) et l'ensemble de récipient (2).

10. Dispositif de préparation de cuisine selon la revendication 9, dans lequel l'ensemble de détection comprend :
un élément de détection prévu sur le corps (1) ; et
un élément à détecter prévu sur l'extrémité de transmission, dans lequel lorsque l'ensemble de récipient (2) est monté sur le corps (1), et que l'ensemble d'outil de coupe (8) et l'ensemble de récipient (2) sont montés normalement, l'élément à détecter est positionné dans une plage de détection de l'élément de détection ;
de préférence, l'élément à détecter est un élément magnétique, et l'élément de détection est un capteur Hall ou un commutateur à lame vibrante sèche.

11. Dispositif de préparation de cuisine selon la revendication 10, dans lequel le dispositif de préparation de cuisine comprend en outre :
un élément de verrouillage (82) de l'outil de coupe raccordé, de manière détachable, à l'extrémité de transmission et fixant l'outil de coupe (8) sur l'ensemble de récipient (2), et l'élément à détecter étant prévu sur l'élément de verrouillage (82) de l'outil de coupe.

12. Dispositif de préparation de cuisine selon l'une quelconque des revendications 1 à 8, dans lequel un mécanisme de déclenchement est prévu dans le corps (1) et le mécanisme de déclenchement est configuré pour pouvoir détecter si l'ensemble de récipient (2) et le corps (1) sont dans un état verrouillé ou pas ; de préférence le mécanisme de déclenchement comprend un premier élément de détection (75), dans lequel lorsque l'élément de verrouillage (4) verrouille le corps (1) et l'ensemble de récipient (2) ensemble, l'élément de verrouillage (4) peut déclencher le premier élément de détection (75).

13. Dispositif de préparation de cuisine selon l'une quelconque des revendications 1 à 8, dans lequel l'ensemble de récipient (2) comprend un corps principal et un couvercle (21) pouvant correspondre au corps principal, un mécanisme de déclenchement est prévu dans le corps (1) et le mécanisme de déclenchement est configuré pour pouvoir détecter un état de montage du couvercle (21) sur le corps principal de l'ensemble de récipient (2) monté sur le corps (1).

14. Dispositif de préparation de cuisine selon la revendication 13, dans lequel un élément de déclenchement (26) est raccordé, de manière mobile, au corps principal, et le mécanisme de déclenchement comprend un second élément de détection (72) ; après que le couvercle (21) a été assemblé en position avec le corps principal, le couvercle (21) entraîne l'élément de déclenchement (26) à se déplacer pour déclencher le second élément de détection (72) ;
de préférence, l'élément de déclenchement (26) est raccordé, de manière coulissante, au corps principal et peut être réinitialisé.

15. Dispositif de préparation de cuisine selon la revendication 14, dans lequel le couvercle (21) correspond, en rotation, au corps principal, une première surface inclinée (211) est prévue sur le couvercle (21), et une seconde surface inclinée (261) est prévue sur l'élément de déclenchement (26) ;
lorsque le couvercle (21) tourne dans une première direction par rapport au corps principal, la première surface inclinée (211) coulisse le long de la seconde surface inclinée (261) et pousse l'élément de déclenchement (26) à coulisser ;
lorsque le couvercle (21) tourne dans une seconde direction par rapport au corps principal, la première surface inclinée (211) est progressivement séparée de la seconde surface inclinée (261), et l'élément de déclenchement (26) est réinitialisé.
